# EUROPEAN PATENT APPLICATION

(11) **EP 2 992 945 A1**
(43) Date of publication of application: **09.03.2016**
(21) Application number: 14183975.3
(22) Date of filing: 08.09.2014
(51) Int. Cl.: B01D 61/02, B01D 61/06, B01D 61/08, B01D 61/12

(54) **Apparatus for purifying a liquid including a cross-flow filtration device**

(71) Applicant: Brita GmbH, 65232 Taunusstein (DE)
(72) Inventor: Köhler, André, 56237 Deesen (DE); Floren, Simon, 65620 Waldbrunn (DE)
(74) Representative: van Lookeren Campagne, Constantijn August

(57) **Abstract**

An apparatus for purifying a liquid includes a cross-flow filtration device (4;4') having an inlet (5;5'), an outlet (6;6') for retentate and an outlet (7;7') for filtrate. The apparatus further includes an accumulator (11;11'), including a first reservoir (12;12') for receiving filtrate and a second reservoir (13;13') for receiving a liquid. The accumulator (11;11') includes a barrier (16;16'), separating the first reservoir (12;12') from the second reservoir (13;13'), of which at least a part is movable to reduce a pressure difference between the first and second reservoirs (12,13;12',13'). The apparatus also includes a flow regulating device (21;21'), arranged in a conduit (18,20,22;18',20',22') for carrying retentate produced by the cross-flow filtration device (4;4'), downstream of a connection (24;24') between the second reservoir (13;13') and the conduit (18,20,22;18',20',22'), and configured to move from an open configuration to a closed configuration when a measure of an amount of filtrate in the accumulator (11;11') has reached a certain value. Liquid flow through the flow regulating device (21;21') is blocked in the closed configuration and enabled in the open configuration. The apparatus further includes a suction device (19;26;31;19') having a suction inlet (25;30;32;25') in fluid communication with the second reservoir (13;13') and arranged to draw liquid from the second reservoir (13;13) only when the flow regulating device (21;21') is in the open configuration.

## Description

The invention relates to an apparatus for purifying a liquid, including:
a cross-flow filtration device having an inlet, an outlet for retentate and an outlet for filtrate;
an accumulator including a first reservoir for receiving filtrate and a second reservoir for receiving a liquid,
the accumulator including a barrier, separating the first reservoir from the second reservoir, of which at least a part is movable to reduce a pressure difference between the first and second reservoirs; and
a flow regulating device, arranged in a conduit for carrying retentate produced by the cross-flow filtration device, downstream of a connection between the second reservoir and the conduit, and configured to move from an open configuration to a closed configuration when a measure of an amount of filtrate in the accumulator has reached a certain value, liquid flow through the flow regulating device being blocked in the closed configuration and enabled in the open configuration.

The invention also relates to a method of operating an apparatus for purifying a liquid, which apparatus includes:
a cross-flow filtration device having an inlet, an outlet for retentate and an outlet for filtrate;
an accumulator including a first reservoir for receiving filtrate and a second reservoir for receiving a liquid,
the accumulator including a barrier, separating the first reservoir from the second reservoir, of which at least a part is movable to reduce a pressure difference between the first and second reservoirs; and
a flow regulating device, arranged in a conduit for carrying retentate produced by the cross-flow filtration device, downstream of a connection between the second reservoir and the conduit, and configured to move from an open configuration to a closed configuration when a measure of an amount of filtrate in the accumulator has reached a certain value, liquid flow through the flow regulating device being blocked in the closed configuration and enabled in the open configuration.

US 2007/0256977 A1 discloses embodiments of a Reverse Osmosis (RO) water filtering system. Water filtered by a sediment filter and a carbon filter passes an RO membrane that creates permeate and concentrate water. A storage tank accumulates the permeate while using the concentrate water to selectively create pressure upon the stored permeate. The RO water filtering system also includes an auxiliary faucet assembly that works with flow restrictors and a shut-off valve to control the output of the RO water filtering system. The RO membrane includes three ports: an intake port, a permeate outlet port and a concentrate outlet pot. The permeate is routed from the outlet port through the shut-off valve and a permeate tube to a first valve of the faucet assembly. The permeate is also diverted through a permeate diverter tube to the permeate storage chamber of the storage tank to be stored under pressure until the valve of the faucet assembly is opened. Concentrate water is routed from the outlet port through the shut-off valve and a primary concentrate tube, and then through an air gap of the faucet for subsequent disposal down a drain. One of the flow restrictors is provided in the primary concentrate tube. The shut-off valve is automatic and is adapted to stop the flow of concentrate water through to the primary concentrate tube when the permeate storage chamber of the tank becomes full of permeate and pressure within the permeate tube rises past a predetermined level indicating that the permeate storage tank is full. The blocked primary concentrate tube prevents additional filtered water from entering the intake port of the RO membrane and prevents the production of additional permeate. A secondary concentrate tube branches off from the primary concentrate tube between the RO membrane and the shut-off switch. The secondary concentrate tube is routed through a second valve of the faucet assembly and connects back to the primary concentrate tube between the first flow restrictor and the air gap of the faucet assembly. The other of the flow restrictors is provided in the secondary concentrate tube. A concentrate diverter tube connects the concentrate water chamber of the tank to the secondary concentrate tube between the second valve and the second flow restrictor. The faucet assembly includes a lever that controls both of the first and second valves of the faucet assembly, such that the valves are substantially simultaneously opened and closed. A primary difference of a second embodiment of the water filtering system is the use of two shut-off valves with a modified faucet assembly. The faucet assembly includes only one valve for controlling the flow of permeate. The second shut-off valve is connected in the permeate path between the RO membrane and faucet assembly. In operation, the second shut-off valve responds to pressure changes. When the lever opens, the pressure drops in tubing connecting the permeate output of the second shut-off valve to the faucet valve to allow permeate and concentrate water to flow through the second shut-off valve. As a result, concentrate water flows into the concentrate chamber via the diverter tube to urge the permeate water in the permeate storage chamber into the diverter tube and ultimately out of the faucet. For the time that the faucet is open, the flow restrictor also creates some bleeding to drain.

In the first system, the storage tank will lose pressure when the faucet is closed for a prolonged period. A problem of the second system is that it requires the second flow restrictor. If the second flow restrictor has a relatively high resistance to flow, then permeate will be produced against a substantial back-pressure when the faucet is closed and the system starts to refill the storage tank. Refilling will take longer and the permeate will be of lower quality as a result. If the resistance to flow of the flow restrictor is low, then it will take longer to empty the storage tank of permeate or it may not be emptied completely. Also, if the resistance to flow is low, there will be a relatively large amount of water flowing through the secondary concentrate tube, which is basically wasted water.

It is an object of the invention to provide an apparatus and method of the types mentioned above in the opening paragraphs that provide a relatively high filtrate quality for a given inlet pressure, waste relatively little liquid and can supply filtrate when required by a downstream appliance without relying on electronic control by the appliance.

This object is achieved by the apparatus according to the invention, which is characterised in that the apparatus includes a suction device having a suction inlet in fluid communication with the second reservoir and arranged to draw liquid from the second reservoir only when the flow regulating device is in the open configuration.

The apparatus includes a cross-flow filtration device having an inlet, an outlet for retentate and an outlet for filtrate. In general, the filtration device includes at least one semi-permeable membrane for separating substances from the liquid to be purified. The liquid that passes through the at least one membrane forms the filtrate. The liquid that flows tangentially across, but not through, the at least one membrane forms the retentate (also referred to as concentrate). Because the apparatus also has an accumulator having a first reservoir for receiving filtrate, it can operate at relatively high trans-membrane pressures and still supply a sufficient amount of filtrate on demand. The accumulator includes a barrier, separating the first from the second reservoir, of which at least a part is movable to reduce a pressure difference between the first and second reservoirs in response to such a pressure difference. A conduit in fluid communication with the second reservoir is provided. Liquid can be received by and expelled from the second reservoir through this conduit. It is thus possible to increase the pressure in the first reservoir by adding fluid to the second reservoir. The pressure in the first reservoir can be decreased again by decreasing the amount of fluid in the second reservoir using the suction device. Thus, the accumulator is distinguished from a compressed-gas closed accumulator. Use of the latter would have the disadvantage that pressure builds up quickly, so that the last filtrate with which it is filled is produced against a substantial back-pressure and thus at a low trans-membrane pressure differential. Low trans-membrane pressure differentials lead to lower-quality filtrate.

The pressure differential and membrane pore size in the apparatus may be sufficient to remove at least one solute from the liquid being purified, in addition to suspended particles. The membrane may, for example, include pores having a pore size of at most 10 Å.

The apparatus includes a flow regulating device such as a pressure-activated valve, arranged in a conduit for carrying retentate produced by the cross-flow filtration device, downstream of a connection between the second reservoir and the conduit. The flow regulating device is configured to move from an open to a closed configuration when a measure of an amount of filtrate in the accumulator has reached a certain value. Thus, when no filtrate is being supplied by the apparatus and the accumulator is full, the pressure in the second reservoir can increase to equal the pressure at the inlet of the cross-flow filtration device. The barrier separating the first reservoir from the second reservoir serves to transfer the pressure to the first reservoir. Where there are not already one or more valves blocking the flow of liquid out of the filtrate outlet of the cross-flow filtration device, the connection between the first reservoir and the filtrate outlet will ensure that the trans-membrane pressure differential is essentially reduced to zero, so that no filtrate is produced. Thus, the transition of the flow regulating device into the closed configuration will result in the production of filtrate ceasing. When the accumulator is full and an appliance connected to receive filtrate from the apparatus starts to draw filtrate, the pressure of the liquid in the second reservoir on the filtrate in the first reservoir is available to ensure relatively rapid emptying of the first reservoir. Such an effect could not be achieved in the same way if a shut-off valve responsive to the filtrate pressure in the accumulator and arranged upstream of the inlet of the cross-flow filtration device were to be used to regulate the production of filtrate by the cross-flow filtration device. Through the use of a suction device having a suction inlet in fluid communication with the second reservoir for drawing liquid from the second reservoir when the flow regulating device is in the open configuration, the trans-membrane pressure during production of filtrate is increased, resulting in more rapid filling of the accumulator with filtrate and in filtrate of a higher quality. When the flow regulating device is moved to the closed configuration, the suction device ceases to maintain an underpressure in the second reservoir. The connection between the second reservoir and the conduit ensures that the pressure in the second reservoir then rises from the underpressure due to the suction pump to the pressure of the untreated liquid, thus allowing subsequent rapid and complete or nearly complete emptying of the accumulator. Because the flow of retentate is controlled by a device configured to move from an open to a closed configuration when a measure of an amount of filtrate in the accumulator has reached a certain value, the operation of the device may be controlled essentially by the flow of filtrate to an appliance arranged to receive the filtrate. There is no need to use an electromagnetic valve controlled by a signal from such an appliance, in particular not to control the flow of retentate.

It is observed that US 6,432,301 discloses a device for producing permeate with an accumulator connected to a permeate line, wherein a non-permeable separating membrane divides the accumulator into a storage chamber and a pressurised chamber. The storage chamber is connected to the permeate line and the pressurised chamber is connected to a control valve of a concentrate line. The control valve is a jet nozzle having a jet head, wherein the concentrate line opens into the jet head. The jet nozzle has a negative pressure chamber surrounding an exit jet issued by the jet head. A suction line is branched off from the negative pressure chamber and connected to the pressurised chamber. The apparatus comprises a common fixture for dispensing the concentrate and the permeate, wherein the fixture has a control valve. In the embodiments described in detail, the fixture is a faucet arranged to switch between supplying permeate and supplying concentrate. In an embodiment, an additional separating chamber is connected to the concentrate line by means of an additional concentrate line downstream of the nozzle. The inflowing volume flow of the concentrate is controlled by an inlet valve arranged in the additional concentrate line. The inlet valve is connected by a control line with a switching contact at a sidewall of the permeate chamber. The opening of the inlet valve is realised as a function of the filling level in the permeate chamber. The valve does not block all flow of concentrate through the jet nozzle, so that the jet nozzle does not reduce the pressure in the pressurised chamber only when the valve is open, but also when it is closed.

In an embodiment of the apparatus according to the invention, the second reservoir is in fluid communication with the conduit to receive retentate when the flow regulating device is in the closed configuration.

Thus, the retentate is used to pressurise the first reservoir when the first reservoir is full. This provides the pressure for dispensing filtrate from the accumulator on demand. The production of filtrate automatically ceases, without the need to provide a further valve. This is because the pressure in the conduit rises as the second reservoir is filled, until it is essentially equal to the pressure at which untreated liquid is supplied. The pressure of the liquid in the first reservoir rises with that of the liquid in the second reservoir. When both reach a value equal to or slightly lower than the pressure of the untreated liquid, there is no longer a sufficient pressure differential across the semi-permeable membrane or membranes in the filtration device to pass liquid through it. Production of filtrate thus ceases. In a variant, the suction device is configured to supply retentate to the second reservoir through the suction inlet when the flow of retentate through the suction device is interrupted. This minimises the number of valves and conduit sections that are needed alternately to apply an underpressure to the second reservoir (when filtrate is being produced) and an overpressure (when filtrate is ready to be dispensed). If the second reservoir were to be filled with untreated liquid in order to pressurise the liquid in the first reservoir, then valves would be needed for alternately connecting the second reservoir to a conduit for carrying untreated liquid and to the suction inlet.

In an embodiment, the suction device is arranged to use the retentate flow through the suction device to pump liquid from the second reservoir.

This embodiment does not require a separate electrical power supply. The apparatus is arranged to function without electrically powered pumps. The apparatus is powered by a pressure differential between the pressure at the inlet and that at an outlet of the apparatus for supplying retentate.

In a variant of this embodiment, the suction device is arranged to pump the liquid from the second reservoir by direct contact with the retentate from the retentate outlet of the filtration device that flows through the suction device.

This variant is relatively simple and cheap to implement. It has few moving parts. The suction device may be a jet pump, for example. Liquid from the second reservoir is entrained by the flow of retentate through the suction device. This flow may in particular create a zone of low pressure, for example because the suction device includes a convergent-divergent nozzle.

In an embodiment, the measure of an amount of filtrate in the accumulator is pressure of the filtrate.

This variant is relatively easy to implement, because sensors need not be provided on the movable part of the barrier, for example. The pressure need not be sensed in the accumulator, but may be sensed at a port of the first reservoir or in a conduit section connected to the first reservoir. In an embodiment in which the pressure is sensed outside the accumulator, means for transmitting a signal representative of the sensed pressure through a wall of the accumulator need not be provided.

In a variant, the apparatus includes a conduit for placing a port of the flow regulating device in fluid communication with a device for sensing the pressure of the filtrate, and the flow regulating device is actuated by fluid in this conduit.

This embodiment is suitable for implementing the apparatus such that an electrical power supply is dispensed with.

In a variant of this embodiment, the conduit for placing a port of the flow regulating device in fluid communication with a device for sensing the pressure of the filtrate is arranged to receive the filtrate.

The device for sensing the pressure of the filtrate may be a simple T-junction in this embodiment. Because the filtrate is used to actuate the flow regulating device, there is no need for transducers for converting the pressure of the filtrate into a pressure of a different working fluid. The filtrate is relatively free of substances that might have a negative effect on the lifespan of the flow regulating device, making it suitable for use as a working fluid.

In an embodiment of the apparatus, the flow regulating device is arranged to move from the closed to the open configuration at a first value of the measure and from the open configuration to the closed configuration at a second value of the measure, the second value being at least equal to the first value.

At least when the second value is higher than the first value, this embodiment ensures that the first reservoir is filled to a first level when filtrate is produced, but emptied by a relatively large amount before filtrate production is resumed. As a result, more filtrate is produced when the first reservoir is filled with a relatively small amount of filtrate. This filtrate is therefore produced at relatively large pressure differentials across the membrane or membranes of the filtration device. Such filtrate has a higher degree of purity. Moreover, the rate of filtrate production is also higher when the pressure differential across the membrane or membranes is high. Thus, filtrate production is resumed at a relatively high rate. A further effect is that the number of cycles of filling and emptying is reduced. This may have a positive effect on the lifespan of the barrier in the accumulator, especially if it is made of a flexible material. A similar hysteresis effect is also achieved when the first value equals the second value in embodiments in which the retentate flow is arranged to drive the suction device.

An embodiment of the apparatus further includes a flow restrictor downstream of the retentate outlet and upstream of the connection to the second reservoir.

When the flow of retentate is resumed upon movement of the flow regulating device into the open configuration, the pressure at the retentate outlet of the filtration device does not immediately drop precipitously in this embodiment. This may help improve the quality of the filtrate that is produced immediately upon resumption of filtrate production. It is noted that the flow restrictor may be an integral part of the suction device.

An embodiment of the apparatus further includes a filtrate flow regulating device, arranged, in a closed configuration, to prevent and, in an open configuration, to permit a flow of liquid from the inlet through the cross-flow filtration device and the filtrate outlet to a filtrate conduit section in fluid communication with the first reservoir, wherein the filtrate flow regulating device is arranged to switch to the open configuration when a value of a control variable drops below a first value and to switch to the closed configuration when the value rises above a second value equal to at least the first value, the control variable corresponding to at least one of a measure of the amount of filtrate in the accumulator and a pressure of filtrate in a section of the apparatus including the first reservoir and the filtrate conduit section.

In this embodiment, it is not just back-pressure that prevents filtrate from being produced when the accumulator is essentially full. When the first reservoir of the accumulator is nearly full, the pressure differential across the membrane of the cross-flow filtration device is relatively small. If filtrate were to be produced, it would be of a lesser quality, because the quality of the filtrate depends on the pressure differential across the membrane. This embodiment is useful when small amounts of filtrate are withdrawn from the apparatus at a time, because such small amounts would otherwise be replaced due to even a small pressure difference between the inlet and the filtrate outlet.

In a variant of this embodiment, the filtrate flow regulating device is located downstream of the filtrate outlet.

As a consequence, the flow of liquid from the inlet to the retentate outlet is not affected by the filtrate flow regulating device. The effect of the flow regulating device in the retentate conduit does not depend on the state of the filtrate flow regulating device. There is no need for a bypass to allow the untreated liquid to enter the second reservoir to pressurise the first reservoir, for example. Furthermore, because the filtrate flow regulating device is located downstream of the filtrate outlet, as opposed to untreated liquid, filtrate passes through it. This gives it a relatively long useful lifespan.

In a variant, the second value is higher than the first value.

In this variant, the first reservoir is emptied to a relatively large extent.

In a variant, the flow regulating device in the retentate conduit is arranged to switch to the open configuration when the measure of the amount of filtrate in the accumulator has dropped below a value corresponding to a value of the control variable equal to at least the first value.

Thus, as the first reservoir is emptied, the flow regulating device in the retentate conduit switches before the filtrate flow regulating device. This causes the suction device to become operational, so that the value of the control variable decreases further to cause the filtrate flow regulating device also to switch to the open configuration. Only then is filtrate production resumed. The suction device is thus always operational during filtrate production, so that a relatively high filtrate quality is achieved. The flow regulating device in the retentate conduit may be arranged to switch at a value corresponding to a value of the control variable higher than the first value.

In a variant, the flow regulating device in the retentate conduit is arranged to switch to the closed configuration when the measure of the amount of filtrate in the accumulator has risen to a value corresponding to a value of the control variable equal to at most the second value.

Thus, as the first reservoir is filled, the flow regulating device in the retentate conduit switches before the filtrate flow regulating device. This causes the pressure in the second reservoir to rise, as the suction device ceases to operate, to a value above the second value. Thereupon the filtrate flow regulating device also closes. If the closing were to be in reverse order, additional measures would be needed to cause the flow regulating device in the retentate conduit to close, because filtrate production would cease before it had done so. The flow regulating device may be arranged to switch to the closed configuration at a value corresponding to a value of the control variable lower than the second value.

An embodiment of the apparatus includes an actuating fluid conduit for placing a port of the filtrate flow regulating device in fluid communication with a device for sensing a pressure of filtrate in the section of the apparatus including the first reservoir and the filtrate conduit section.

This embodiment dispenses with electronic control means. The sensing device may include a simple T-junction in the section of the apparatus including the filtrate conduit section and the first reservoir. There may be a transmission mechanism and/or an isolating means between the actuating fluid and the fluid in such a T-junction.

However, in a particular variant, which is simple to implement, the actuating fluid conduit is arranged to receive the filtrate.

According to another aspect, the method of operating an apparatus for purifying a liquid is characterised by using the flow regulating device to control the operation of a suction device having a suction inlet in fluid communication with the second reservoir.

Thus, an underpressure for generating filtrate is generated in the first reservoir when the first reservoir is empty. This ceases when the first reservoir is full or full enough. The degree to which the first reservoir is filled governs the production of filtrate, rather than a signal from a device controlling the operation of the apparatus electronically.

In an embodiment of the method, the apparatus is an apparatus according to the invention.

The invention will be explained in further detail with reference to the accompanying drawings, in which:
- Fig. 1: is a diagram of an apparatus for filtering a liquid;
- Fig. 2: is a schematic cross-section of a suction device for use in the apparatus of Fig. 1;
- Fig. 3: is a schematic cross-section of an alternative suction device for use in the apparatus of Fig. 1; and
- Fig. 4: is a diagram of a modified version of the apparatus of Fig. 1.

An apparatus for purifying a liquid includes an inlet 1 for receiving a liquid to be purified. In an embodiment, the inlet 1 is configured for connection to the mains water supply. The apparatus further includes an outlet 2 for supplying filtrate to an appliance 3 connected directly or indirectly to the outlet 2. In an alternative embodiment, the outlet 2 is configured as a tap or other type of device for dispensing filtrate into a vessel (not shown).

The apparatus includes a filtration device 4. The filtration device 4 is a membrane device, arranged for operation in cross-flow mode. It thus includes at least one membrane for separating substances from the liquid to be purified. The liquid that passes through the at least one membrane forms the filtrate. The liquid that flows tangentially across, but not through, the at least one membrane forms retentate (also referred to as concentrate). The or each membrane may be included in a spiral wound, hollow fibre or tubular membrane module, or it may be present in sheet form on a frame.

The example of a method of purifying a liquid by reverse osmosis will be used herein. In other embodiments, the membrane or membranes are arranged for microfiltration, ultrafiltration or nanofiltration. Thus, the filtration device 4 may be suitable for purifying a liquid by removing suspended particles and at least one solute or only suspended particles.

The filtration device 4 is provided with a filtration device inlet 5, an outlet 6 for retentate and an outlet 7 for filtrate. The liquid purification apparatus as a whole is configured such that the purification process is driven exclusively by the pressure differential between the inlet 1 and the filtrate outlet 7. It is thus arranged to function in the absence of any external energy supply, e.g. to power a pump.

The filtrate outlet 7 is connected to the outlet 2 of the apparatus by a filtrate conduit 8. A conduit section 9 connects the filtrate conduit 8 to a first port 10 of a hydraulic accumulator 11.

The accumulator 11 includes a first reservoir 12 for receiving filtrate and a second reservoir 13 for receiving retentate. The first port 10 provides a fluid connection to the first reservoir 12. The accumulator 11 includes a second port 14, providing a fluid connection to the second reservoir 13. The accumulator 11 includes a relatively rigid tank 15, in which the ports 10,14 are provided, and a flexible barrier 16. The barrier divides the tank 15 into the first and second reservoirs 12,13. In one embodiment, the barrier 16 forms a bladder. An interior of the bladder forms one of the first and second reservoirs 12,13, with the space between the tank 15 and the bladder forming the other of the first and second reservoirs 12,13. In another embodiment, the flexible barrier 16 is formed by an impermeable membrane sealingly attached at its edge or edges to the tank 15 or to an edge of an aperture in a partitioning wall in the tank 15. The membrane may be constituted as bellows. In an alternative embodiment, a piston is used instead of the flexible barrier 16. Thus, at least a part of the barrier 16 is movable with respect to the tank 15 when subjected to a pressure differential between the first and second reservoirs 12,13. The movement is such as to reduce the pressure difference between the first and second reservoirs 12,13.

In the illustrated embodiment, a valve 17 is arranged in the filtrate conduit 8 between the point at which the conduit section 9 connecting the filtrate conduit 8 branches off and the outlet 2 for connecting the apparatus to the appliance 3. The valve 17 will generally only be closed by an operator or service technician when disconnecting the appliance 3.

The retentate outlet 6 of the filtration device 4 is connected to a retentate conduit including a first conduit section 18, leading from the retentate outlet 6 to a suction device 19, a second conduit section 20, leading from an outlet of the suction device 19 to a valve 21, and a third conduit section 22, leading from the valve 21 to a drain 23.

A conduit section 24 connects the second port 14 of the accumulator 11 to a suction inlet 25 of the suction device 19. The second reservoir 13 is thus in fluid communication with the suction inlet 25. The suction device 19, when operational, is arranged to draw liquid from the second reservoir 13 whenever retentate flows through the retentate conduit. When no retentate is flowing through the retentate conduit, the suction inlet 25 and the connecting conduit section 24 place the second reservoir 13 in fluid communication with the first conduit section 18.

The suction device 19 is arranged to use the retentate flow through the suction device 19 to pump liquid from the second reservoir 13. There is thus no need for an external power source. Rather, the suction device 19 is a pump in which the retentate drawn from the second reservoir 13 is pumped through the suction device 19 by direct contact with the retentate flowing from the first conduit section 18 to the second conduit section 20 through the suction device 19.

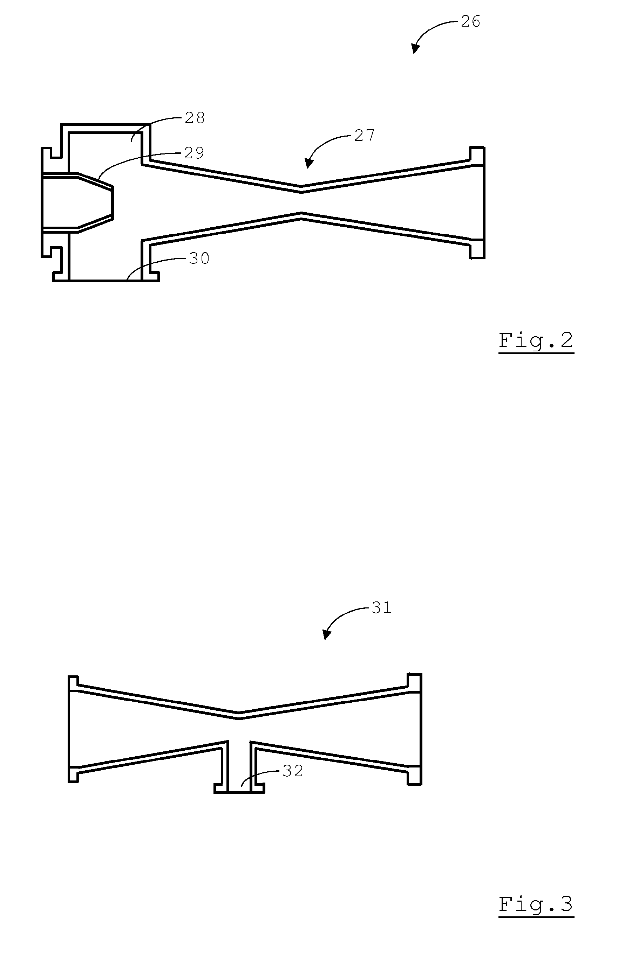

In a first embodiment (Fig. 2), the suction device 19 includes an ejector 26, including a convergent-divergent nozzle 27 for creating a zone of low pressure downstream of a chamber 28 into which a nozzle 29 protrudes. The chamber is provided with a port 30 for forming the suction inlet 25 of the suction device 19. The liquid from the second reservoir is entrained by the flow of liquid through the nozzle 29, partly by a zone of low pressure created in the convergent-divergent nozzle 27 and partly by the transfer of momentum from the jet of liquid emanating from the nozzle 29 projecting into the chamber 28.

In a second embodiment (Fig. 3), the suction device 19 includes a straightforward Venturi-device 31, with the suction inlet 32 joining a convergent-divergent nozzle at a throat of the latter.

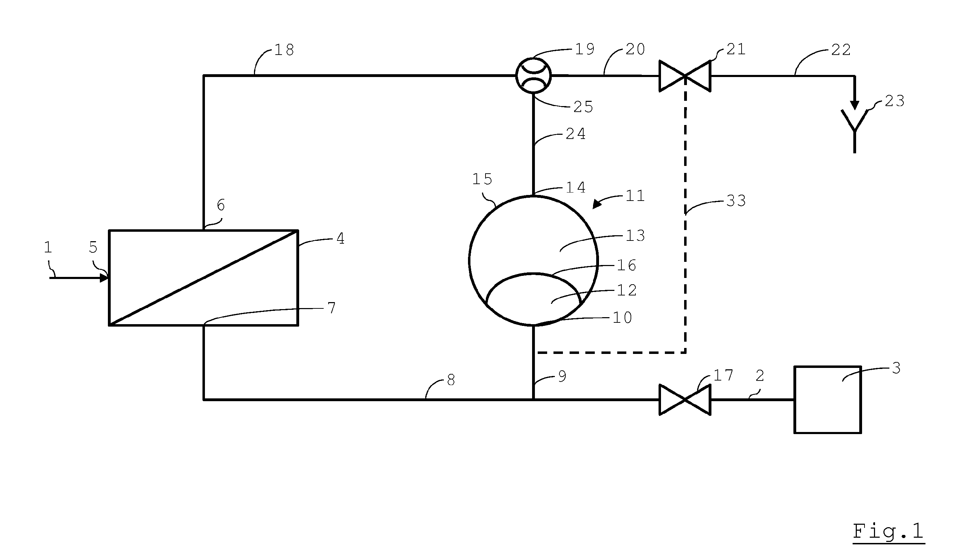

The underpressure generated by the suction device 19 (Fig. 1) lowers the pressure in the first reservoir 12 to increase the pressure differential between the inlet 5 and the filtrate outlet 7, and thus the trans-membrane pressure, whenever the retentate flows through the retentate conduit. This increases the speed with which the first reservoir 12 is filled. Furthermore, the purity of the filtrate is improved. This effect is enhanced by controlling the operation of the apparatus such that the production of filtrate is interrupted when the accumulator 11 is filled with filtrate to a certain level, which may be close to its maximum capacity, and then emptied to a lower level before the production of filtrate is resumed. Thus, more filtrate is produced at relatively high trans-membrane pressure differentials.

The valve 21 essentially provides this effect. It is a hydraulically actuated valve, responsive to one of the pressure of the filtrate in the first reservoir 12, the pressure of the filtrate in the conduit section 9 connecting it to the filtrate conduit 8 and the pressure in the filtrate conduit 8 itself. In the illustrated embodiment, a conduit 33 places a port of the valve 21 in direct fluid communication with the conduit section 9 connecting the first reservoir 12 to the filtrate conduit 8. Thus, the valve 21 is directly actuated by the filtrate. In an alternative embodiment, the valve 21 is actuated by a fluid isolated from the filtrate, wherein a device for sensing the pressure of the filtrate and transmitting this pressure at a certain ratio (which may be 1:1) to the actuating fluid is provided. In either case, electronic control circuits are dispensed with.

The valve 21 is arranged to move from an open to a closed configuration when the filtrate pressure exceeds a certain value, wherein liquid flow through at least the second and third conduit sections 20,22 is blocked. As a consequence, the pressure in the second reservoir 13 rises relatively quickly from a value corresponding to an underpressure to a value essentially equal to the pressure at the inlet 5 of the filtration device 4. This reduces the trans-membrane differential to a value causing the production of filtrate essentially to cease. In other words, when a measure of the amount of filtrate in the accumulator 11 reaches a value indicating that it is essentially full, the production of filtrate essentially ceases. Moreover, liquid does not continue to flow to the drain 23.

The valve 21 is arranged to move from the closed to an open configuration when the filtrate pressure drops below a certain value. The flow of retentate through the retentate conduit is then resumed, so that the pressure in the second reservoir 13 drops quite quickly. The production of filtrate is thus resumed relatively quickly. The convergent nozzle 29 or the convergent-divergent nozzle of the Venturi-device 31 ensure that the trans-membrane pressure differential does not drop precipitously on resumption of flow through the retentate conduit. The pressure at the inlet 5 of the filtration device 4 on the upstream side of the membrane is thus initially maintained.

It is possible to empty the accumulator 11 to a relatively large extent. This is due to the fact that the valve 21 controls the operation of the suction device 19 by controlling the flow of retentate. Closing the valve 21 when the pressure has risen leads to a further pressure rise in the accumulator 11. Opening the valve 21 when the pressure has fallen leads to a further pressure drop as the suction device 19 recommences operation and creates an underpressure. The effect may be enhanced by using a valve 21 that is arranged to move from the closed configuration to the open configuration at a first value of the filtrate pressure and from the open to the closed configuration at a second value of the filtrate pressure, the second value being higher than the first value.

It is noted that the production and dispensing of filtrate is essentially controlled by the flow of filtrate through the outlet 2. Electronic interfaces for providing a control signal to the apparatus are not required. In particular, no signals need be exchanged between the appliance 3 and a control device of the apparatus. The appliance 3 is supplied with filtrate at a relatively high pressure approaching the pressure of the liquid at the inlet 1 due to the fact that the retentate valve 21 is in the closed configuration when filtrate is being supplied from the accumulator 11 whereas the first conduit section 18 remains in fluid communication with the connecting conduit section 24 via the suction device 19.

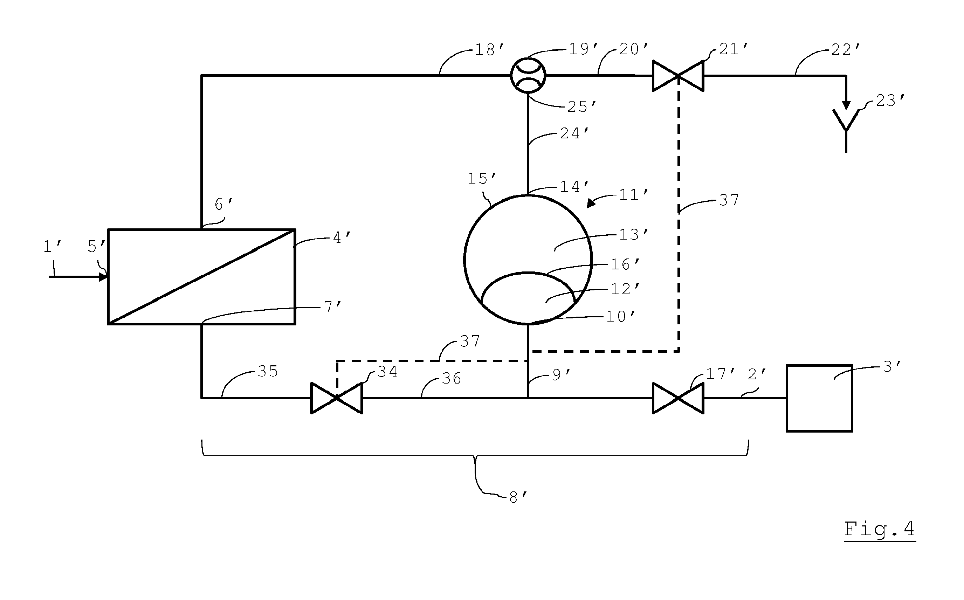

A modified version of the liquid purification apparatus (Fig. 4) is similar to the apparatus described above. Like parts have been given like reference numerals and the following description will focus on the differentiating features.

The modified liquid purification apparatus includes a filtrate valve 34 in the filtrate conduit 8'. The filtrate valve 34 is situated at the downstream end of a first filtrate conduit section 35 of which the upstream end is in fluid communication with the filtrate outlet 7'. A second filtrate conduit section 36 extends from the filtrate valve 34 to the valve 17'. The connecting conduit section 9' branches off from the second filtrate conduit section 36. The pressure transfer conduit 33 is connected to a section of the apparatus including the first reservoir 12' and the second filtrate conduit section 36.

The filtrate valve 34 is arranged, in a closed configuration, to prevent and, in an open configuration, to permit a flow of filtrate from the first filtrate conduit section 35 to the second filtrate conduit section 36. Thus, it also regulates a flow of liquid from the inlet 1' through the cross-flow filtration device 4' and the filtrate outlet 7' and thereby the production of filtrate.

A second pressure transfer conduit 37 carries filtrate as the actuating fluid to a port of the filtrate valve 34, which is hydraulically actuated. The filtrate valve 34 switches in response to a change in pressure of the filtrate in a section of the liquid purification apparatus including the first reservoir 12', the second filtrate conduit section 36 and the connecting conduit section 9'. In the example, there is a direct connection between the second pressure transfer conduit 37 and this section of the liquid purification apparatus. The pressure of the filtrate in this section is thus the control variable to which the filtrate valve 34 responds.

The filtrate valve 34 switches between the open and the closed configurations. It switches from the closed to the open configuration when the value of the control variable drops below a first value as the first reservoir is emptied of filtrate. This first value is lower than or equal to the certain value at which the retentate valve 21' switches to the open configuration. Thus, the retentate valve 21' switches first. When it opens, the suction device 19' commences operation. As a result, the value of the control variable first decreases further, namely below the first value. This causes the filtrate valve 34 to open also, allowing filtrate production to resume.

The filtrate valve 34 switches from the open to the closed configuration responsive to the value of the control variable rising above a second value. The second value is equal to or higher than the value at which the retentate valve 21' switches to the closed configuration. Thus, as the first reservoir 12' is filled, the retentate valve 21' switches first. The closing of the retentate valve 21' causes the suction device 19' to cease pumping retentate out of the second reservoir 13' and the diversion of liquid from the retentate outlet 6' to the second reservoir 13'. This causes the value of the control variable to rise above the second value, whereupon the filtrate valve 34 also closes and filtrate production ceases.

As a consequence, the effect of increasing the quality of the filtrate through the use of the suction device 19' is achieved consistently and to a higher extent. More of the filtrate is produced at higher pressure differentials across the membrane of the cross-flow filtration device 4'. The retentate valve 21' controls the operation of the suction device 19'. The filtrate valve 34 controls the production of filtrate and responds to the pressure changes brought about by the switching of the suction device 19' from and to its operational state. Control and actuation of the retentate valve 21' and the filtrate valve 34 is hydraulic. Because the retentate valve 21' responds to the fill level of the first reservoir 12', it is essentially the appliance 3' that controls the production of filtrate through its withdrawal of the filtrate through the outlet 2'.

The invention is not limited to the embodiments described above, which may be varied within the scope of the accompanying claims. For example, the measure of the amount of filtrate in the first reservoir 12 of the accumulator 11 may be a different one than the filtrate pressure. It may for instance be a measure of the displacement of the barrier 16 or at least the movable part thereof. The retentate need not necessary flow to the drain 23, but may be collected and put to some useful purpose.

The flow regulating device may be a valve, but it could be a different type of device, e.g. a positive displacement machine or the like. A single device may fulfil the functions of both the suction device and the flow regulating device, so that they need not be separate devices.

### List of reference numerals

- 1,1': inlet
- 2,2': outlet
- 3,3': appliance
- 4,4': filtration device
- 5,5': filtration device inlet
- 6,6': outlet for retentate
- 7,7': outlet for filtrate
- 8,8': filtrate conduit
- 9,9': connecting conduit section
- 10,10': first port
- 11,11': accumulator
- 12,12': first reservoir
- 13,13': second reservoir
- 14,14': second port
- 15,15': tank
- 16,16': barrier
- 17,17': valve in filtrate conduit
- 18,18': first conduit section
- 19,19': suction device
- 20,20': second conduit section
- 21,21': retentate valve
- 22,22': third conduit section
- 23,23': drain
- 24,24': connecting conduit section
- 25,25': suction inlet
- 26: ejector
- 27: convergent-divergent nozzle
- 28: chamber
- 29: nozzle protruding into chamber
- 30: chamber port
- 31: Venturi-device
- 32: suction inlet
- 33,33': pressure transfer conduit
- 34: filtrate valve
- 35: 1^{st} filtrate conduit section
- 36: 2^{nd} filtrate conduit section
- 37: 2^{nd} pressure transfer conduit

## Claims

1. Apparatus for purifying a liquid, including:
a cross-flow filtration device (4;4') having an inlet (5;5'), an outlet (6;6') for retentate and an outlet (7;7') for filtrate;
an accumulator (11;11') including a first reservoir (12;12') for receiving filtrate and a second reservoir (13;13') for receiving a liquid,
the accumulator (11;11') including a barrier (16;16'), separating the first reservoir (12;12') from the second reservoir (13;13'), of which at least a part is movable to reduce a pressure difference between the first and second reservoirs (12,13;12',13'); and
a flow regulating device (21;21'), arranged in a conduit (18,20,22;18',20',22') for carrying retentate produced by the cross-flow filtration device (4;4', downstream of a connection (24;24') between the second reservoir (13;13') and the conduit (18,20,22;18',20',22'), and configured to move from an open configuration to a closed configuration when a measure of an amount of filtrate in the accumulator (11;11') has reached a certain value, liquid flow through the flow regulating device (21;21') being blocked in the closed configuration and enabled in the open configuration,
**characterised in that**
the apparatus includes a suction device (19;26;31;19') having a suction inlet (25;30;32;25') in fluid communication with the second reservoir (13;13') and arranged to draw liquid from the second reservoir (13;13') only when the flow regulating device (21;21') is in the open configuration.

2. Apparatus according to claim 1,
wherein the second reservoir (13;13') is in fluid communication with the conduit (18,20,22;18',20',22') to receive retentate when the flow regulating device (21;21') is in the closed configuration.

3. Apparatus according to claim 1 or 2,
wherein the suction device (19;26;31;19') is arranged to use the retentate flow through the suction device (19;26;31;19') to pump liquid from the second reservoir (13;13').

4. Apparatus according to claim 3,
wherein the suction device (19;26;31;19') is arranged to pump the liquid from the second reservoir (13;13') by direct contact with the retentate from the retentate outlet (6;6') of the filtration device (4;4') that flows through the suction device (19;26;31;19').

5. Apparatus according to any one of the preceding claims,
wherein the measure of an amount of filtrate in the accumulator (11;11') is pressure of the filtrate.

6. Apparatus according to claim 5,
wherein the apparatus includes a conduit (33;33') for placing a port of the flow regulating device in fluid communication with a device for sensing the pressure of the filtrate, and
wherein the flow regulating device (21;21') is actuated by fluid in this conduit (33;33').

7. Apparatus according to any one of the preceding claims,
wherein the flow regulating device (21;21') is arranged to move from the closed to the open configuration at a first value of the measure and from the open configuration to the closed configuration at a second value of the measure, the second value being at least equal to the first value.

8. Apparatus according to any one of the preceding claims,
further including a filtrate flow regulating device (34), arranged, in a closed configuration, to prevent and, in an open configuration, to permit a flow of liquid from the inlet (1') through the cross-flow filtration device (4') and the filtrate outlet (7') to a filtrate conduit section (9',36) in fluid communication with the first reservoir (12'),
wherein the filtrate flow regulating device (34) is arranged to switch to the open configuration when a value of a control variable drops below a first value and to switch to the closed configuration when the value rises above a second value equal to at least the first value, the control variable corresponding to at least one of a measure of the amount of filtrate in the accumulator (11') and a pressure of filtrate in a section of the apparatus including the first reservoir (12') and the filtrate conduit section (9',36).

9. Apparatus according to claim 8,
wherein the filtrate flow regulating device (34) is located downstream of the filtrate outlet (7').

10. Apparatus according to claim 8 or 9,
wherein the second value is higher than the first value.

11. Apparatus according to any one of claims 8-10,
wherein the flow regulating device (21') in the retentate conduit (18',20',22') is arranged to switch to the open configuration when the measure of the amount of filtrate in the accumulator (11') has dropped below a value corresponding to a value of the control variable equal to at least the first value.

12. Apparatus according to any one of claims 8-11,
wherein the flow regulating device (21') in the retentate conduit (18',20',22') is arranged to switch to the closed configuration when the measure of the amount of filtrate in the accumulator (11') has risen to a value corresponding to a value of the control variable equal to at most the second value.

13. Apparatus according to any one of claims 8-12,
including an actuating fluid conduit (37) for placing a port of the filtrate flow regulating device (34) in fluid communication with a device for sensing a pressure of filtrate in the section of the apparatus including the first reservoir (12') and the filtrate conduit section (9',36).

14. Method of operating an apparatus for purifying a liquid, which apparatus includes:
a cross-flow filtration device (4;4') having an inlet (5;5'), an outlet (6;6') for retentate and an outlet (7;7') for filtrate;
an accumulator (11;11') including a first reservoir (12;12') for receiving filtrate and a second reservoir (13;13') for receiving a liquid,
the accumulator (11;11') including a barrier (16;16'), separating the first reservoir (12;12') from the second reservoir (13;13'), of which at least a part is movable to reduce a pressure difference between the first and second reservoirs (12,13;12',13'); and
a flow regulating device (21;21'), arranged in a conduit (18,20,22;18',20',22') for carrying retentate produced by the cross-flow filtration device (4;4'), downstream of a connection (24;24') between the second reservoir (13;13') and the conduit (18,20,22;18',20',22'), and configured to move from an open configuration to a closed configuration when a measure of an amount of filtrate in the accumulator (11;11') has reached a certain value, liquid flow through the flow regulating device (21;21') being blocked in the closed configuration and enabled in the open configuration,
**characterised by**
using the flow regulating device (21;21') to control the operation of a suction device (19;26;31;19') having a suction inlet (25;30;32;25') in fluid communication with the second reservoir (13;13').

15. Method according to claim 14,
wherein the apparatus is an apparatus according to any one of claims 1-13.
